# EUROPEAN PATENT APPLICATION

(11) **EP 2 762 350 A1**
(43) Date of publication of application: **06.08.2014**
(21) Application number: 11873088.6
(22) Date of filing: 27.09.2011
(51) Int. Cl.: B60L 9/18, B60K 6/44, B60L 11/14, B60W 10/06, B60W 10/08, B60W 20/00

(54) **VEHICLE AND CONTROL METHOD FOR VEHICLE**

(71) Applicant: Toyota Jidosha Kabushiki Kaisha, Toyota-shi, Aichi 471-8571 (JP)
(72) Inventor: AMANO, Takashi, Toyota-shi Aichi 471-8571 (JP)
(74) Representative: Intès, Didier Gérard André
(86) International application number: PCT/JP2011/071975
(87) International publication number: WO 2013/046310

(57) **Abstract**

A vehicle (100) includes a motor generator (130) for generating driving power for running by using electric power from a power storage device (110), and an ECU (300) for controlling the motor generator (130). When user request power is substantially constant, the ECU (300) causes an interval operation of running the vehicle (100) to be performed, the interval operation switching between a first running pattern (coasting running) in which the generation of the driving power by the motor generator (130) is stopped and the vehicle (100) runs with inertial force of the vehicle, and a second running pattern (acceleration running) in which the vehicle runs with the driving power generated by the motor generator (130). As a result, energy efficiency of the vehicle (100) is improved.

## Description

### TECHNICAL FIELD

The present invention relates to vehicles and methods of controlling the vehicles, and more particularly to running control of a vehicle that runs by switching between running with driving power from a driving source and running with inertial force of the vehicle.

### BACKGROUND ART

In recent years, vehicles incorporating a power storage device (such as a secondary battery or capacitor) and running with driving power generated from electric power stored in the power storage device have been receiving attention as environmentally friendly vehicles. Examples of such vehicles include an electric vehicle, a hybrid vehicle, and a fuel cell vehicle.

There is a need to improve energy efficiency of these vehicles by increasing gasoline mileage and electric mileage, so as to further reduce environmental loads.

Japanese National Patent Publication No. 2008-520485 (PTD 1) discloses a hybrid vehicle including an internal combustion engine and a motor generator, in which the motor generator is controlled, when in a generator mode, in such a manner that the motor generator alternates between a first interval and a second interval. During the first interval, the motor generator is driven to operate with a high output which is greater than an actual power consumption of a vehicle electrical system. During the second interval, the motor generator is switched off.

According to Japanese National Patent Publication No. 2008-520485 (PTD 1), when the motor generator operates as a generator, the motor generator is driven at an operating point of high efficiency in the first interval and the motor generator is stopped in the second interval. As a result, continuation of the operation of the motor generator with low efficiency during operation of electric power generation can be suppressed, thus improving energy efficiency of the vehicle during the operation of electric power generation.

Japanese Patent Laying-Open No. 2010-6309 (PTD 2) discloses a hybrid vehicle including an internal combustion engine and a motor generator, which is configured to alternate between running with driving power generated by the internal combustion engine and running in a coasting state in which the internal combustion engine is stopped. As a result, the internal combustion engine can be driven at an operating point of high efficiency, thus improving gasoline mileage.

### CITATION LIST

### PATENT DOCUMENTS

PTD 1: Japanese National Patent Publication No. 2008-520485
PTD 2: Japanese Patent Laying-Open No. 2010-6309
PTD 3: Japanese Patent Laying-Open No. 2009-298232
PTD 4: Japanese Patent Laying-Open No. 2007-187090

### SUMMARY OF INVENTION

### TECHNICAL PROBLEM

Japanese National Patent Publication No. 2008-520485 (PTD 1), however, discloses the configuration where driving and stopping of the motor generator is repeated when the motor generator generates electric power, and does not conduct a study of running the vehicle with the driving power generated by the motor generator.

Japanese Patent Laying-Open No. 2010-6309 (PTD 2) merely discloses the configuration where driving and stopping of an engine which is the internal combustion engine is repeated in the hybrid vehicle, and does not conduct a study of operation of the motor generator.

Accordingly, the techniques disclosed in these patent documents cannot be applied to running with driving power of only a motor generator such as in an electric vehicle, or to running with driving power of a motor generator preferentially used in a hybrid vehicle.

The present invention has been made in order to solve such problems, and an object of the present invention is to improve energy efficiency during running of a vehicle capable of running with driving power of at least a motor generator.

### SOLUTION TO PROBLEM

A vehicle according to the present invention is a vehicle capable of running with electric power from a power storage device, which includes a rotating electric machine for generating driving power for running the vehicle by using the electric power from the power storage device, and a control device for controlling the rotating electric machine. The control device causes an interval operation of running the vehicle to be performed, the interval operation switching between a first running pattern in which the generation of the driving power by the rotating electric machine is stopped and the vehicle runs with inertial force of the vehicle, and a second running pattern in which the vehicle runs with the driving power generated by the rotating electric machine.

Preferably, the control device causes the interval operation to be performed, when driving power requested by a user varies within a prescribed range.

Preferably, the control device causes switching between the first and second running patterns so as to maintain a speed of the vehicle within an acceptable range, while the interval operation is performed.

Preferably, the control device causes switching to the first running pattern in response to an increase in the speed of the vehicle to an upper limit of the acceptable range, and causes switching to the second running pattern in response to a decrease in the speed of the vehicle to a lower limit of the acceptable range.

Preferably, the vehicle further includes an engine capable of generating driving power for the vehicle. The control device causes the engine to be operated during a period when the vehicle runs in the second running pattern.

Preferably, when the engine is operated and the driving power from the engine is used for running, the control device causes the driving power generated by the rotating electric machine to decrease to a level lower than a level when the engine is not operated.

Preferably, the vehicle further includes a generator configured to be driven by the engine to generate electric power for charging the power storage device. The control device causes the engine to be operated when the generator is driven to charge the power storage device.

Preferably, when a state of charge of the power storage device falls below a predetermined threshold value, the control device causes the generator to be driven to charge the power storage device.

Preferably, the control device causes the engine to be operated in response to the operation of the rotating electric machine in the second running pattern.

Preferably, the vehicle further includes another rotating electric machine capable of generating driving power for the vehicle. The control device causes the another rotating electric machine to be operated during a period when the vehicle runs in the second running pattern.

A method of controlling a vehicle according to the present invention is a method of controlling a vehicle capable of running with driving power from a rotating electric machine. The control method includes the steps of performing a first running pattern in which the generation of the driving power by the rotating electric machine is stopped and the vehicle runs with inertial force of the vehicle, performing a second running pattern in which the vehicle runs with the driving power generated by the rotating electric machine, and performing an interval operation in which the vehicle runs by switching between the first and second running patterns.

### ADVANTAGEOUS EFFECTS OF INVENTION

According to the present invention, energy efficiency can be improved during running of a vehicle capable of running with driving power of at least a motor generator.

### BRIEF DESCRIPTION OF DRAWINGS

Fig. 1 is an overall block diagram of a vehicle according to a first embodiment.
Fig. 2 is a time chart illustrating the outline of inertial running control in the first embodiment.
Fig. 3 is a time chart illustrating operation during acceleration in the inertial running control.
Fig. 4 is a time chart illustrating operation during deceleration in the inertial running control.
Fig. 5 is a flow chart illustrating a process of the inertial running control performed by an ECU in the first embodiment.
Fig. 6 is an overall block diagram of a vehicle according to a second embodiment.
Fig. 7 illustrates a first example of inertial running control in the second embodiment.
Fig. 8 illustrates a second example of inertial running control in the second embodiment.
Fig. 9 is a flow chart illustrating a process of the inertial running control performed by an ECU in the second embodiment.
Fig. 10 is an overall block diagram of a vehicle according to a variation of the second embodiment.

### DESCRIPTION OF EMBODIMENTS

Embodiments of the present invention will be hereinafter described in detail with reference to the drawings, in which the same or corresponding elements are designated by the same reference characters, and the description thereof will not be repeated.

### [First Embodiment]

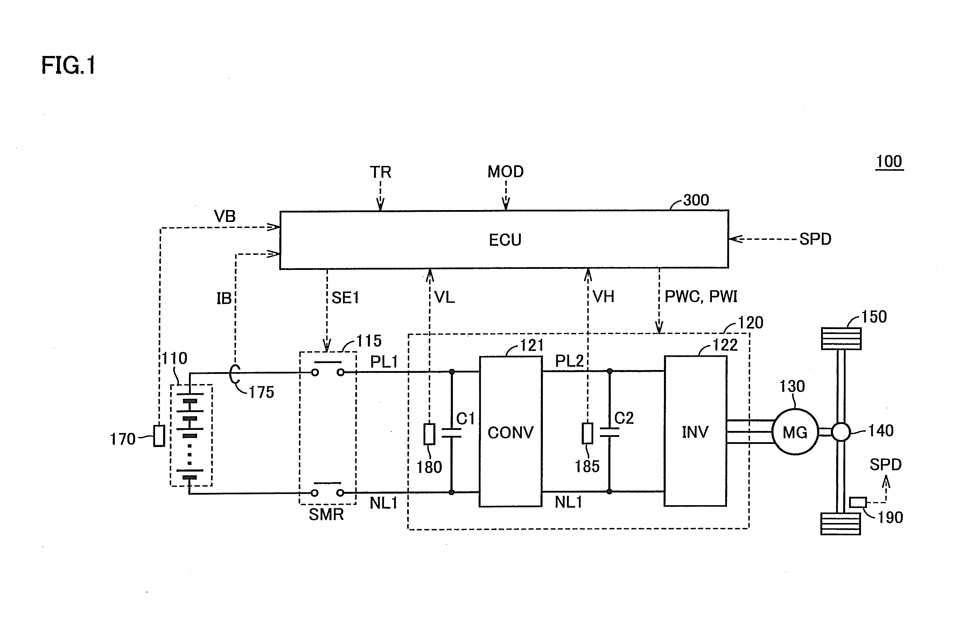

Fig. 1 is an overall block diagram of a vehicle 100 according to a first embodiment of the present invention. As will be described below in detail, vehicle 100 is an electric vehicle including a rotating electric machine as a driving source.

Referring to Fig. 1, vehicle 100 includes a power storage device 110, a system main relay (SMR) 115, a PCU (Power Control Unit) 120 which is a driving device, a motor generator 130, a power transmission gear 140, a drive wheel 150, and an ECU (Electronic Control Unit) 300 which is a control device. PCU 120 includes a converter 121, an inverter 122, voltage sensors 180, 185, and capacitors C1, C2.

Power storage device 110 is an electric power storage component configured in a chargeable/dischargeable manner. Power storage device 110 includes a secondary battery such as a lithium-ion battery, a nickel-metal hydride battery or a lead-acid battery, or a power storage element such as an electric double layer capacitor.

Power storage device 110 is connected to PCU 120 through power lines PL1 and NL1. Power storage device 110 supplies PCU 120 with electric power for generating driving power for vehicle 100. Power storage device 110 stores electric power generated by motor generator 130. An output of power storage device 100 is, for example, about 200 V.

Power storage device 110 is provided with a voltage sensor 170 and a current sensor 175. Voltage sensor 170 detects a voltage VB of power storage device 110, and outputs the result of the detection to ECU 300. Current sensor 175 detects a current IB input to and output from the power storage device, and outputs the detected values to ECU 300.

SMR 115 includes a relay having one end connected to a positive electrode terminal of power storage device 110 and the other end connected to power line PL1 that is connected to PCU 120, and another relay having one end connected to a negative electrode terminal of power storage device 110 and the other end connected to power line NL1 that is connected to PCU 120. In response to a control signal SE1 from ECU 300, SMR 115 switches between supply and interruption of electric power between power storage device 110 and PCU 120.

In response to a control signal PWC from ECU 300, converter 121 converts a voltage between power lines PL1, NL1 and power lines PL2, NL1.

Inverter 122 is connected to power lines PL2 and NL1. In response to a control signal PWI from ECU 300, inverter 122 converts DC power from converter 121 to AC power, to drive motor generator 130.

Capacitor C1 is provided between power lines PL1 and NL1, and reduces voltage variation between power lines PL1 and NL1. Capacitor C2 is provided between power lines PL2 and NL1, and reduces voltage variation between power lines PL2 and NL1.

Voltage sensors 180 and 185 detect voltages VL and VH across capacitors C1 and C2, respectively, and output the detected values to ECU 300.

Motor generator 130 is an AC rotating electric machine, for example, a permanent magnet synchronous motor including a rotor in which a permanent magnet is embedded.

An output torque of motor generator 130 is transmitted to drive wheel 150 through power transmission gear 140 including a reduction gear and a power split device, to run vehicle 100. During regenerative braking operation of vehicle 100, motor generator 130 can generate electric power by rotation of drive wheel 150. The generated electric power is then converted by PCU 120 to charging power for power storage device 110.

A speed sensor 190 is provided in the vicinity of drive wheel 150 so as to detect the speed of vehicle 100 (vehicle speed). Speed sensor 190 detects a vehicle speed SPD based on a rotational speed of drive wheel 150, and outputs the detected value to ECU 300. As a speed sensor, a rotation angle sensor (not shown) for detecting a rotation angle of motor generator 130 may be used. In this case, ECU 300 causes vehicle speed SPD to be indirectly computed based on temporal variation in rotation angle of motor generator 130, a reduction ratio and the like.

Although not shown in Fig. 1, ECU 300 includes a CPU (Central Processing Unit), a storage device and an input/output buffer, causes input of signals from various sensors and the like and output of control signals to various devices, and controls the various devices of power storage device 110 and vehicle 100. Such control is not limited to software processing, but may be processed by dedicated hardware (electronic circuitry).

ECU 300 causes generation and output of control signals for controlling PCU 120, SMR 115 and the like. Although Fig. 1 shows a configuration where one control device is provided as ECU 300, a control device may be provided for each function or for each device to be controlled, such as a control device for PCU 120 and a control device for power storage device 110.

ECU 300 causes an SOC (State of Charge) of power storage device 110 to be computed based on the detected values of voltage VB and current IB from voltage sensor 170 and current sensor 175 provided on power storage device 110.

ECU 300 receives a request torque TR, which is determined based on operation of an accelerator pedal (not shown) by a user, from an upper ECU (not shown). ECU 300 causes generation of controls signals PWC and PWI for converter 121 and inverters 122 based on request torque TR from the user, respectively, to drive motor generators 130.

ECU 300 also receives a mode signal MOD which is set by the user. This mode signal MOD is a signal for indicating whether or not inertial running control which will be described later should be performed. Mode signal MOD is switched through a specific switch or setting on an operation screen. Alternatively, mode signal MOD may be automatically set when specific conditions are satisfied.

For example, ECU 300 operates such that the inertial running control is performed when mode signal MOD is set to ON, and operates such that normal running is performed without the inertial running control when mode signal MOD is set to OFF.

In such a vehicle, the electric power in the power storage device is consumed when driving power is generated by motor generator 130. Since power storage device 110 has a predetermined capacity, there is a need to improve energy efficiency during running to suppress power consumption in order for the vehicle to run the longest distance possible with the electric power stored in the power storage device.

Inertial force acts on a vehicle during vehicle running. Thus, if the generation of driving power by a motor generator is stopped during running, the vehicle continues to coast with the inertial force for some time.

During this coasting running when the motor generator is not driven, electric power in a power storage device is not consumed. Accordingly, if the vehicle can run utilizing the coasting running with the inertial force, energy efficiency during the vehicle running can be improved.

Thus, according to this embodiment, in the electric vehicle shown in Fig. 1, when the request torque from the user is substantially constant and the vehicle is running at a vehicle speed thereby maintained substantially constant, the inertial running control is performed to run the vehicle by conducting operation (hereinafter also referred to as "interval operation") in which running of using the driving power from the motor generator and coasting running of stopping the generation of driving power from the motor generator are repeated, thereby improving energy efficiency during running.

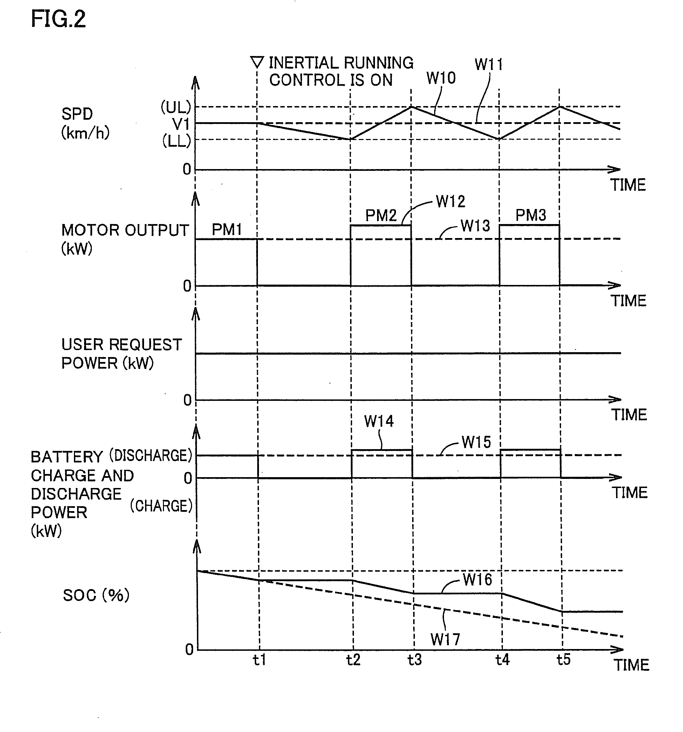

Fig. 2 is a time chart illustrating the outline of the inertial running control in the first embodiment. In Fig. 2, a horizontal axis represents time, and a vertical axis represents vehicle speed SPD, the output of the motor generator, request power from the user, charge and discharge power of the power storage device, and the SOC of the power storage device. Regarding the charge and discharge power of the power storage device, the discharge power is represented as positive value and the charge power is represented as negative value.

Referring to Figs. 1 and 2, it is assumed, for example, that vehicle 100 is running on a flat road at a constant vehicle speed VI. In this case, power requested by the user is given as a substantially constant value, as shown in Fig. 2. That "power requested by the user is a substantially constant value" refers to a state in which the user request power is maintained within a predetermined range (e.g., ±3 km/h) during a prescribed period of time, albeit with some variation.

When the inertial running control in the first embodiment is not applied, an output of substantially constant magnitude is continuously provided from motor generator 130, as indicated by a broken line W13 in Fig. 2. As such, vehicle speed SPD is maintained substantially constant, as indicated by a broken line W11 in Fig. 2.

At this time, power storage device 110 continuously outputs constant electric power as indicated by a broken line W15 in Fig. 2, causing the SOC of power storage device 110 to linearly decrease as indicated by a broken line W17 in Fig. 2.

In contrast, when the inertial running control in the first embodiment is applied, acceleration running of driving motor generator 130 and coasting running of stopping motor generator 130 are alternately repeated.

Specifically, until time t1, the inertial running control in the first embodiment is not applied, and a motor output PM1 is continuously provided.

When the user indicates that the inertial running control should be performed at time t1, motor generator 130 is stopped (a solid line W12 in Fig. 2). As a result, motor generator 130 stops generating the driving power, causing coasting running with the inertial force to start and vehicle speed SPD to gradually decrease, as indicated by a solid line W10 in Fig. 2.

At this time, the charge and discharge power of power storage device 110 becomes zero. Thus, reduction in SOC is suppressed.

Then, when vehicle speed SPD decreases to a lower limit value LL of a predetermined acceptable range with respect to target vehicle speed V1 (time t2 in Fig. 2), driving of motor generator 130 is resumed. The motor output at this time is set to PM2 larger than output PM1 required to maintain vehicle speed V1. Vehicle 100 is thus accelerated. During the generation of driving power at this time, although a decrease in SOC is larger than when coasting running is not performed, the total SOC is maintained at a high level (a solid line W16 in Fig. 2) since electric power has not been consumed by the coasting running between times t1 and t2.

Then, when vehicle speed SPD increases to an upper limit value UL of the predetermined acceptable range, motor generator 130 is stopped again (time t3 in Fig. 2) and coasting running is performed.

Then, in a similar manner, motor generator 130 is driven when vehicle speed SPD decreases to lower limit value LL, and motor generator 130 is stopped when vehicle speed SPD increases to upper limit value UL.

By repeating such interval operation, a decrease in SOC of the power storage device can be suppressed while an average speed of vehicle speed SPD is maintained substantially at V1, although vehicle speed SPD varies within the above acceptable range. As a result, energy efficiency can be improved as a whole, thereby increasing the distance that can be traveled with the electric power stored in the power storage device.

It is to be noted that the motor output and acceleration time when accelerating the vehicle by driving the motor generator can be set appropriately. For example, the acceleration time may be set to a prescribed period of time, and the motor output may be set such that vehicle speed SPD can be increased from lower limit value LL to upper limit value UL during that period. Alternatively, the motor output used for acceleration may be set to a prescribed output, and the acceleration time may be set depending on the situation. If the acceleration time is too short, large power is needed, which may cause torque shock. If the motor output is too small, on the other hand, the acceleration time, namely, driving time of the motor generator is increased, making it difficult to perform coasting running. In addition, since the efficiency of the motor generator may decline relatively in a low output range, the energy efficiency may not be improved if the motor generator is driven with a low output for a long time. Therefore, the acceleration time and the motor output during acceleration are set appropriately in consideration of drivability and energy efficiency.

In the inertial running control according to the first embodiment, as described above, the interval operation as shown in Fig. 2 is performed when the user request power is substantially constant. In other words, the interval operation is not performed during acceleration and deceleration when the user request power varies.

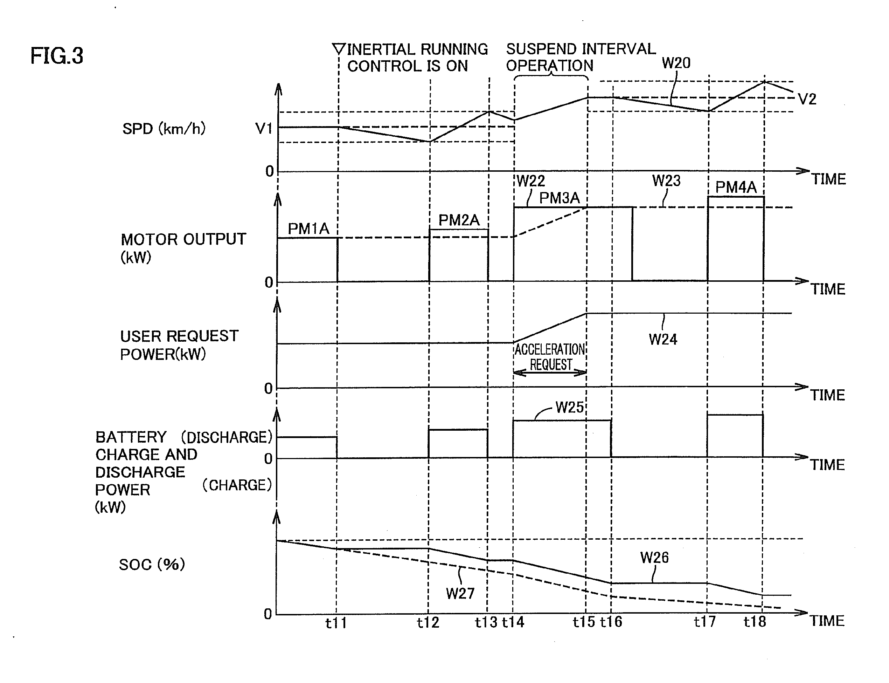

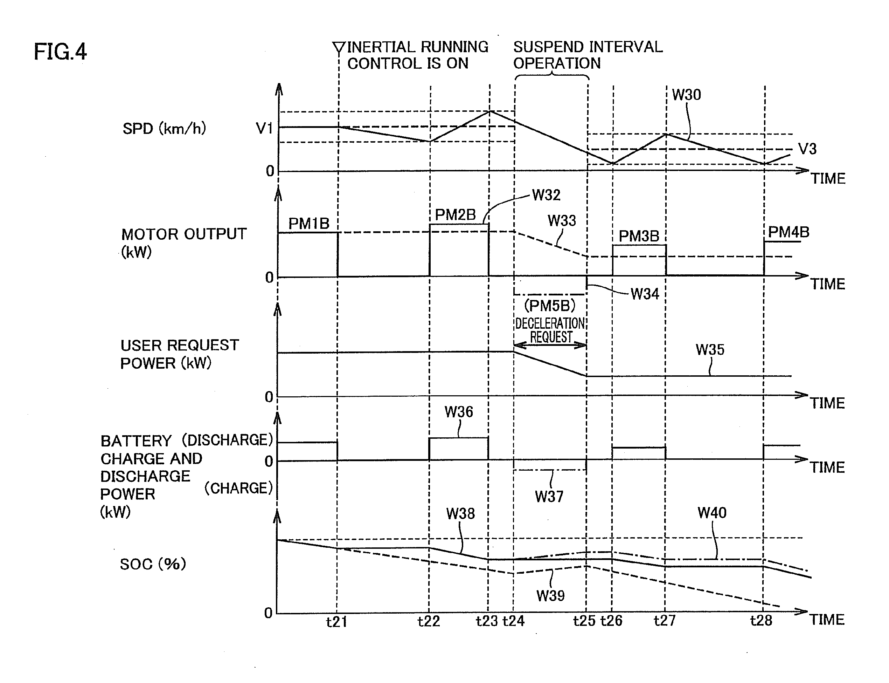

Figs. 3 and 4 illustrate operations during acceleration and deceleration, respectively, when the inertial running control is applied. In Figs. 3 and 4, in a manner similar to Fig. 2, a horizontal axis represents time, and a vertical axis represents vehicle speed SPD, the output of the motor generator, request power from the user, charge and discharge power of the power storage device, and the SOC of the power storage device.

Referring to Figs. 1 and 3, when the user indicates that the inertial running control should be performed at time t11, in a manner similar to Fig. 2, the interval operation is performed so as to maintain vehicle speed V1 until time t14.

Then, when an acceleration request is received with an increase in user request power at time t14 during coasting running (a solid line W24 in Fig. 3), the interval operation is suspended while the user request power varies (between times t14 and t15). Then, the motor output is increased to PM3A for acceleration (a solid line W22 in Fig. 3).

Then, when the acceleration operation by the user ends and vehicle speed SPD becomes constant at V2 (V2 > V1) at time t15, the output from motor generator 130 is stopped again, and the interval operation is resumed so as to maintain vehicle speed V2 (a solid line W20 in Fig. 3).

Next, the operation during deceleration is described with reference to Fig. 4. Referring to Figs. 1 and 4, the interval operation is performed at vehicle speed V1 until time t24, as with the period until time t14 in Fig. 3.

Then, when a deceleration request is received with a decrease in user request power at time t24 during coasting running (a solid line W35 in Fig. 4), the interval operation is suspended while the user request power varies (between times t24 and t25). At this time, the motor output is maintained at zero, and the vehicle is decelerated while being maintained in a coasting running state (a solid line W32 in Fig. 4). When a deceleration request is received during acceleration running, acceleration operation is suspended and the running is shifted to coasting running.

Alternatively, if the vehicle needs to be decelerated more quickly, regenerative braking may be performed by motor generator 130. In this case, motor generator 130 outputs a negative motor output PM5B by regeneration (a chain-dotted line W34 in Fig. 4), to charge power storage device 110 (a chain-dotted line W37 in Fig. 4). The SOC is thus increased (a chain-dotted line W40 in Fig. 4).

It is to be noted that SOC variation when the inertial running control is not applied, as indicated by a broken line W39 in Fig. 4, indicates a state in which regenerative braking is performed by motor generator 130 during the period of the deceleration request (between times t24 and t25). Thus, the SOC is increased between times t24 and t25.

When the coasting running is performed during the period of the deceleration request (between times t24 and t25), on the other hand, motor generator 130 neither consumes nor generates electric power between times t24 and t25, although not shown in Fig. 4. Thus, the SOC indicated by broken line W39 in Fig. 4 is substantially constant without variation.

In this manner, if the vehicle is accelerated or decelerated in response to the variation in user request power while the inertial running control is applied, the interval operation of motor generator 130 is suspended.

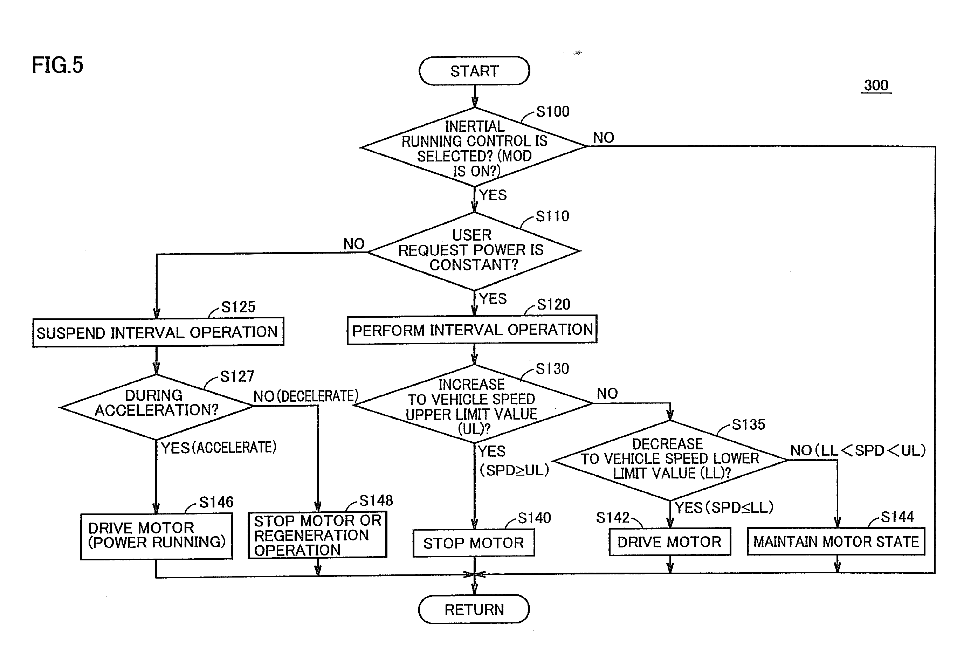

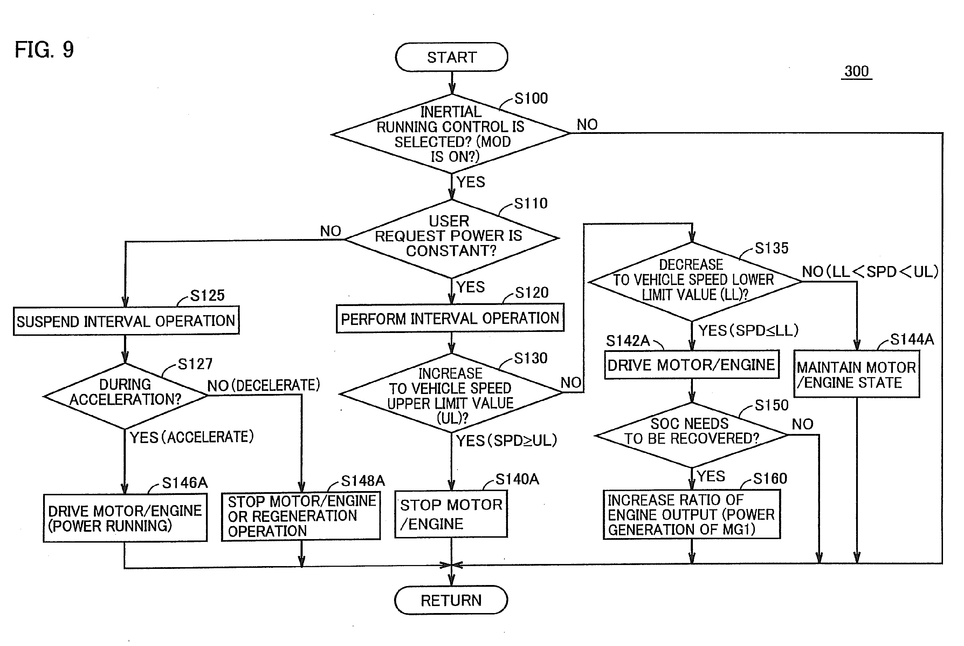

Fig. 5 is a flow chart illustrating the process of the inertial running control performed by ECU 300 in the first embodiment. The steps in the flow chart shown in Fig. 5 and Fig. 9 described later are implemented by executing a program stored in advance in ECU 300 at regular intervals. Alternatively, processing of part of the steps may be implemented by building dedicated hardware (electronic circuitry).

Referring to Figs. 1 and 5, in step (the step is hereinafter abbreviated as S) 100, ECU 300 causes a determination to be made of whether or not the inertial running control has been selected based on mode signal MOD which is set by the user.

If mode signal MOD has been set to OFF and the inertial running control has not been selected (NO in S100), the subsequent processing is skipped and ECU 300 causes the process to return to a main routine.

If mode signal MOD has been set to ON and the inertial running control has been selected (YES in S100), the process proceeds to S110 where ECU 300 causes a determination to be made of whether or not the user request power is substantially constant based on request torque TR.

If the user request power is substantially constant (YES in S110), the process proceeds to S120 where ECU 300 causes a selection to be made such that the interval operation is performed. Although not shown in Fig. 5, immediately after the start of the interval operation, motor generator 130 is stopped first and coasting running is performed, as shown in Figs. 2 to 4.

Then, in S130, ECU 300 causes a determination to be made of whether or not vehicle speed SPD has increased to upper limit value UL of the acceptable speed range.

As described above, immediately after the start of the interval operation, motor generator 130 is stopped first and coasting running is performed. Thus, vehicle speed SPD is lower than upper limit value UL, and gradually decreases.

That is, since vehicle speed SPD has not increased to upper limit value UL of the acceptable speed range (NO in S130), the process proceeds to S135 where ECU 300 causes a determination to be made of whether or not vehicle speed SPD has decreased to lower limit value LL of the acceptable speed range.

While vehicle speed SPD decreases within the acceptable speed range (LL < SPD < UL), namely, when vehicle speed SPD has not decreased to lower limit value LL of the acceptable speed range (NO in S135), the process proceeds to S144 where ECU 300 causes a current state of motor generator 130 to be maintained, to continue the coasting running. The process then returns to the main routine, and the process is performed again from S100 in the next control cycle.

When vehicle speed SPD decreases to lower limit value LL of the acceptable speed range (SPD ≤ LL) while the coasting running is continued (YES in S135), the process proceeds to S142 where ECU 300 causes motor generator 130 to be driven to perform acceleration running. Vehicle speed SPD is thus increased.

While the vehicle speed increases within the acceptable speed range due to this acceleration running, NO is selected in S130 and S135. Then, in S144, ECU 300 causes the acceleration running to be continued until vehicle speed SPD reaches upper limit value UL of the acceptable speed range.

Then, when vehicle speed SPD increases to upper limit value UL of the acceptable speed range (YES in S130), the process proceeds to S140 where ECU 300 causes motor generator 130 to be stopped to perform coasting running.

While the user request power is maintained substantially constant, the interval operation as described above is performed so as to maintain vehicle speed SPD within the acceptable speed range.

If the user request power varies for the purpose of acceleration or deceleration (NO in S110), on the other hand, the process proceeds to S125 where ECU 300 causes the interval operation to be suspended.

Then, when acceleration is indicated by the user request power (YES in S127), ECU 300 causes motor generator 130 to be driven in a power running state, to accelerate vehicle 100 (S146).

When deceleration is indicated by the user (NO in S127), on the other hand, the process proceeds to S148 where ECU 300 causes either deceleration by coasting running of stopping motor generator 130, or deceleration involving regenerative braking of driving motor generator 130 in a regenerative state, to be performed. Alternatively, the vehicle may be decelerated by switching between the deceleration by coasting running and the deceleration involving regenerative braking.

Then, when the acceleration or deceleration operation by the user ends and the user request power becomes substantially constant (YES in S 110), the interval operation is resumed.

By performing the control in accordance with the process as described above, when the user request power is substantially constant, the interval operation of repeating coasting running and acceleration running can be performed to thereby improve energy efficiency during the vehicle running.

### [Second Embodiment]

In the first embodiment, the inertial running control of performing the interval operation of repeating coasting running and acceleration running was described in the case of an electric vehicle that runs with driving power generated by one motor generator.

In the second embodiment, an example of application of the inertial running control in the case of a vehicle that runs with driving power from a plurality of driving sources will be described.

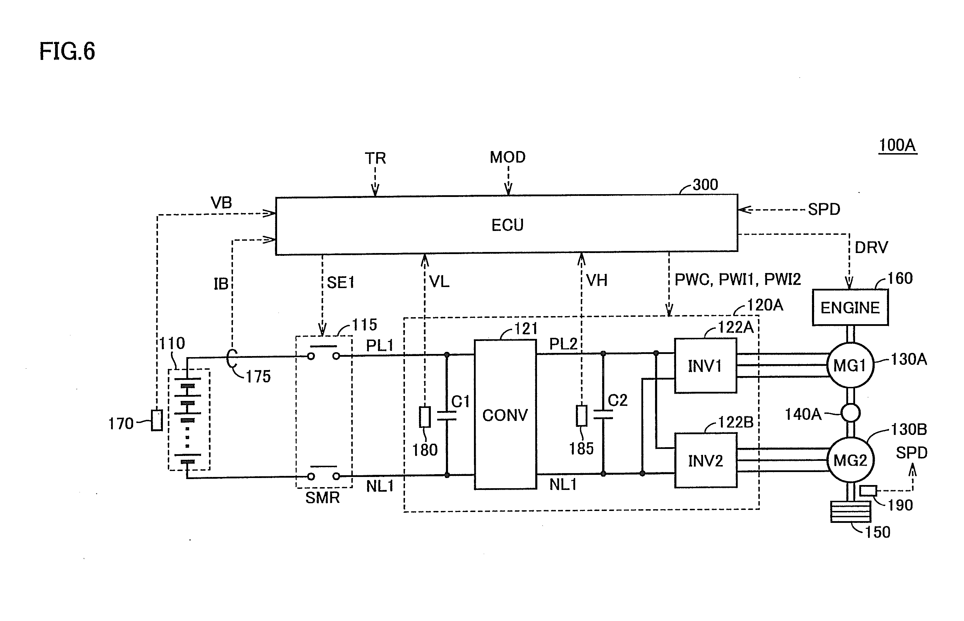

Fig. 6 is an overall block diagram of a vehicle 100A according to the second embodiment. Vehicle 100A is a hybrid vehicle including a rotating electric machine and an engine which is an internal combustion engine as driving sources.

In Fig. 6, PCU 120 in Fig. 1 is replaced by a PCU 120A, and motor generator 130 is replaced by motor generators 130A, 130B and engine 160 as driving sources. The descriptions of the elements in Fig. 6 the same as those in Fig. 1 will not be repeated.

Referring to Fig. 6, PCU 120A includes converter 121, inverters 122A, 122B, capacitors C1, C2, and voltage sensors 180, 185.

Inverters 122A and 122B are connected in parallel to converter 121 through power lines PL2 and NL1.

Inverter 122A is controlled by a control signal PWI1 from ECU 300, and converts DC power from converter 121 to AC power, to drive motor generator 130A (hereinafter also referred to as an "MG1"). Inverter 122A converts AC power generated by motor generator 130A to DC power, to charge power storage device 110 through converter 121.

Inverter 122B is controlled by a control signal PWI2 from ECU 300, and converts DC power from converter 121 to AC power, to drive motor generator 130B (hereinafter also referred to as an "MG2"). Inverter 122B also converts AC power generated by motor generator 130B to DC power, to charge power storage device 110 through converter 121.

Motor generators 130A and 130B have output shafts coupled to a power transmission gear 140A including a power split device such as a planetary gear. Driving power from motor generators 130A and 130B is transmitted to drive wheel 150.

Motor generators 130A and 130B are also coupled to engine 160 through power transmission gear 140A. Engine 160 is controlled by a control signal DRV from ECU 300. Driving power generated by engine 160 is transmitted to drive wheel 150 and motor generator 130A through power transmission gear 140A. ECU 300 cooperatively controls driving power generated by motor generators 130A, 130B and engine 160, to run the vehicle.

In the second embodiment, motor generator 130A is used exclusively as a starter motor when starting engine 160 and as a generator for generating electric power by being driven by engine 160. Motor generator 130B is used exclusively as a motor for driving drive wheel 150 by using the electric power from power storage device 110.

Although Fig. 6 shows an exemplary configuration where two motor generators and one engine are provided, the number of motor generators is not limited as such. For example, one motor generator may be provided. Alternatively, more than two motor generators may be provided.

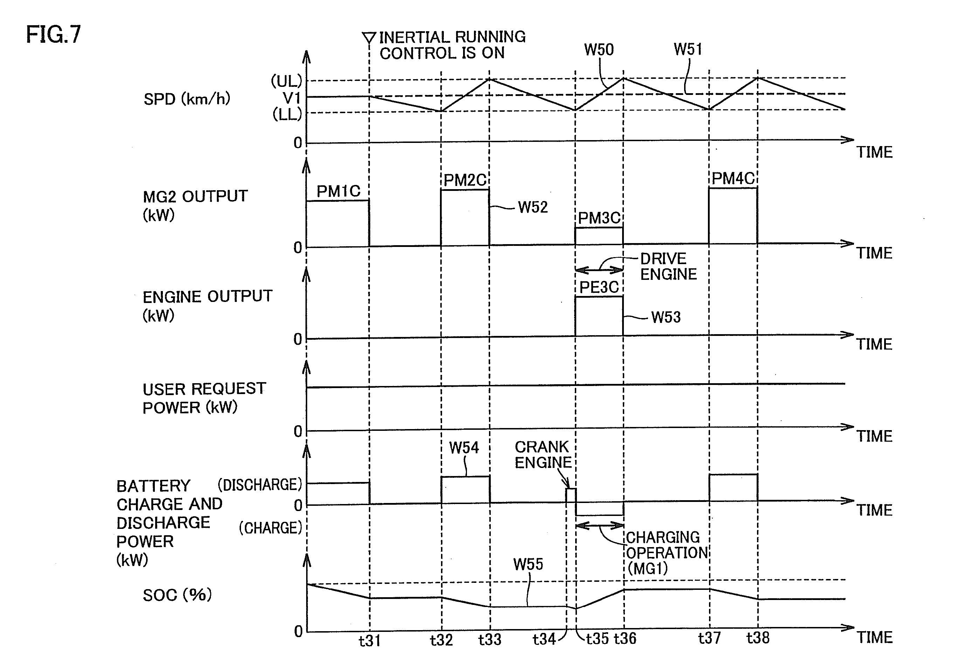

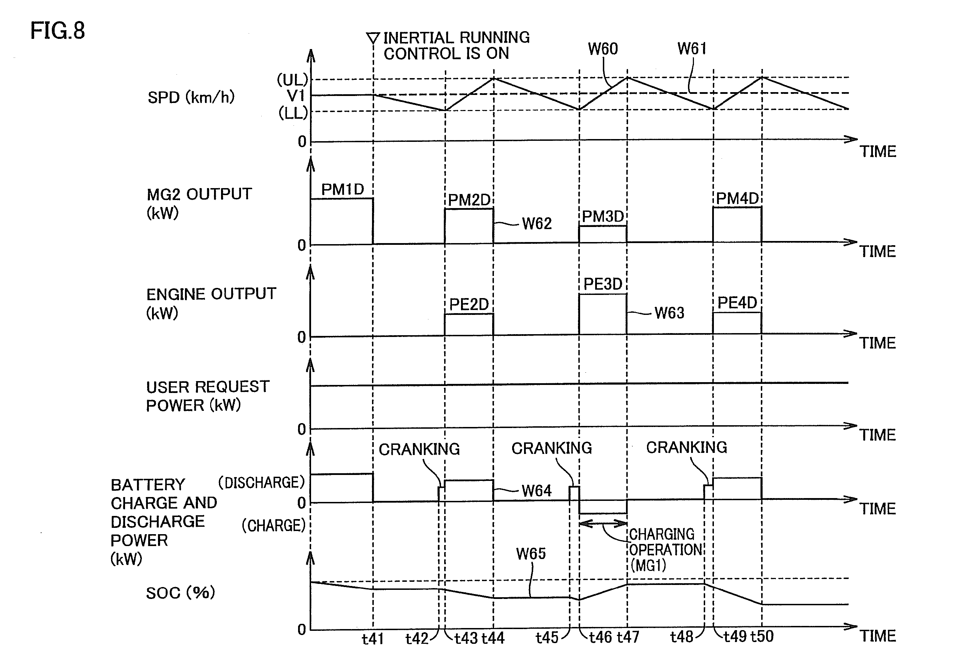

Referring now to Figs. 7 and 8, the outline of inertial running control in the second embodiment is described. In Figs. 7 and 8, in a manner similar to Figs. 2 to 4 in the first embodiment, a horizontal axis represents time, and a vertical axis represents vehicle speed SPD, the output of the motor generator, request power from the user, charge and discharge power of the power storage device, and the SOC of the power storage device.

Referring to Figs. 6 and 7, when the user indicates that the inertial running control should be performed at time t31, in a manner similar to the first embodiment, interval operation of repeating coasting running in which the generation of driving power by motor generator 130B (MG2) is stopped and acceleration running in which the vehicle is accelerated with the driving power of MG2 is performed.

When the SOC decreases and falls below a prescribed threshold value and power storage device 110 needs to be charged, engine 160 is cranked and started by motor generator 130A (MG1) (time t34 in Fig. 7) before the acceleration running by MG2.

Then, when vehicle speed SPD decreases to lower limit value LL of the acceptable range (time t35 in Fig. 7), acceleration running of using the driving power from MG2 and engine 160 is performed (between times t35 and t36 in Fig. 7). At this time, MG1 is driven by part of the driving power of engine 160, and power storage device 110 is charged with the electric power generated by MG1 (solid lines W54 and W55 in Fig. 7).

Then, when vehicle speed SPD increases to upper limit value UL of the acceptable range, MG2 and engine 160 are stopped and coasting running is performed again.

Between times t35 and t36 when both MG2 and engine 160 are driven, the driving power (output) generated by MG2 is set to be smaller than the driving power when engine 160 is not driven (PM3C < PM2C, PM4C). This is because the efficiency of engine 160 itself may indeed decline if engine 160 is driven with too low a load. Namely, engine 160 can be driven at an operating point of higher efficiency when outputting certain driving power. As a result, the driving power generated by MG2 is reduced to decrease power consumption by MG2, thereby improving electric mileage.

Therefore, if acceleration running is performed only with the driving power from engine 160 and further power storage device 110 can be charged by MG1, the driving power generated by MG2 may be set to zero. Although charging of power storage device 110 by driving engine 160 is completed in single acceleration running in Fig. 7, if power storage device 110 cannot be charged sufficiently in single acceleration running, engine 160 may be driven over a plurality of successive periods of acceleration running.

Fig. 7 shows an example where engine 160 is driven together with MG2 when power storage device 110 needs to be charged. In other words, except when power storage device 110 is charged, the so-called EV (Electric Vehicle) running only with the driving power generated by MG2 is performed.

Fig. 8 illustrates an example where engine 160 is driven also during a period other than when power storage device 110 is charged, during acceleration running in the interval operation. Examples of such a state include a state in which driving power from both MG2 and engine 160 is required in order to obtain required driving power when the vehicle is running with constant request power in a relatively high output state, such as when driving on an expressway.

In Fig. 8, when the user indicates that the inertial running control should be performed at time t41, coasting running and acceleration running are repeated in the interval operation. Then, between times t43 and t44, t46 and t47, and t49 and t50 in Fig. 8 when acceleration running is performed, both MG2 and engine 160 are driven (solid lines W62 and W63 in Fig. 8). In this manner, if sufficient driving power required for acceleration running cannot be obtained by the driving power generated only by MG2, engine 160 is started whenever acceleration running is performed (times t42, t45 and t48), to use the driving power generated by MG2 and engine 160 for running.

In this case, too, when the SOC decreases to a level at which power storage device 110 needs to be charged, MG1 is driven by engine 160 to generate electric power (between times t46 and t47 in Fig. 8).

In Fig. 8, the ratio of driving power allocated to MG2 and engine 160 when performing the acceleration running is determined appropriately in consideration of the efficiency of MG2 and engine 160. Thus, depending on the efficiency of MG2 and engine 160, the driving power allocated to MG2 may be higher than the driving power allocated to engine 160, and vice versa.

Fig. 9 is a flow chart illustrating the process of the inertial running control performed by ECU 300 in the second embodiment. In Fig. 9, steps S140, S142, S 144, S 146 and S 148 in Fig. 5 described in the first embodiment are replaced by S140A, S 142A, S144A, S 146A and S 148A, respectively, and steps S150 and S160 are added. The descriptions of the steps in Fig. 9 the same as those in Fig. 5 will not be repeated.

Referring to Figs. 6 and 9, S140A, S142A, S144A, S146A and S148A in Fig. 9 include driving/stopping of engine 160 in addition to motor generator 130B (MG2) in S140, S 142, S 144, S 146 and S 148 in Fig. 5, respectively. That is, both MG2 and engine 160 are stopped during coasting running, and both MG2 and engine 160 are driven during acceleration running. As was described with reference to Figs. 7 and 8, however, engine 160 may not be driven if the user request power can be obtained by the driving power generated only by MG2.

Accordingly, if the user request power is constant and the interval operation is performed (YES in S 110), when vehicle speed SPD decreases to lower limit value LL (YES in S 135), ECU 300 causes MG2 and engine 160 to be driven with the driving power allocated at the ratio predetermined based on the user request power, to perform acceleration running (S 142A). Then, when vehicle speed SPD increases to upper limit value UL (YES in S130), ECU 300 causes MG2 and engine 160 to be stopped to perform coasting running (S140A).

If the user request power varies and the interval operation is suspended (NO in S110), when the vehicle is being accelerated (YES in S127), ECU 300 causes MG2 and engine 160 to be driven with the driving power at the predetermined ratio to accelerate the vehicle (S146A), and when the vehicle is being decelerated (NO in S127), ECU 300 causes MG2 and engine 160 to be stopped, or causes regenerative operation by MG2 to be performed, to decelerate the vehicle (S148A).

Steps S150 and S160 added in Fig. 9 constitute a process used to charge power storage device 110 with the electric power generated by MG1.

If acceleration running in the interval operation is selected in S 142A, in S150, ECU 300 causes a determination to be made of whether or not the SOC needs to be recovered by charge of power storage device 110.

If the SOC needs to be recovered (YES in S150), the process proceeds to S160 where ECU 300 causes the driving power generated by engine 160 to be increased, and causes power storage device 110 to be charged with the electric power generated by MG1. ECU 300 also causes the ratio between the driving power generated by MG2 and the driving power generated by engine 160 to be changed, to reduce the driving power of MG2.

If the SOC does not need to be recovered (NO in S150), on the other hand, the processing in S160 is skipped, and MG2 and engine 160 are driven with the driving power allocated at the ratio predetermined based on the user request power.

By performing the control in accordance with the process as described above, when the user request power is substantially constant in the hybrid vehicle including the engine and the motor generator, the interval operation can be performed to improve energy efficiency. Furthermore, when the SOC decreases, the SOC can be recovered by increasing the driving power of the engine and generating electric power using the motor generator during acceleration running of the interval operation, while continuing the interval operation.

Although the timings of driving and stopping the motor generator and the engine are shown to be substantially simultaneous in Figs. 7 and 8 for the purpose of illustration, the timings of driving/stopping the motor generator and the engine do not need to be exactly simultaneous. That is, these timings can be set appropriately in consideration of the response and the like of the driving power of the motor generator and the engine. For example, the timings of driving/stopping the motor generator having a relatively high response may be set as a reference, to correspondingly delay or advance the timings of driving/stopping the engine.

### [Variation of Second Embodiment]

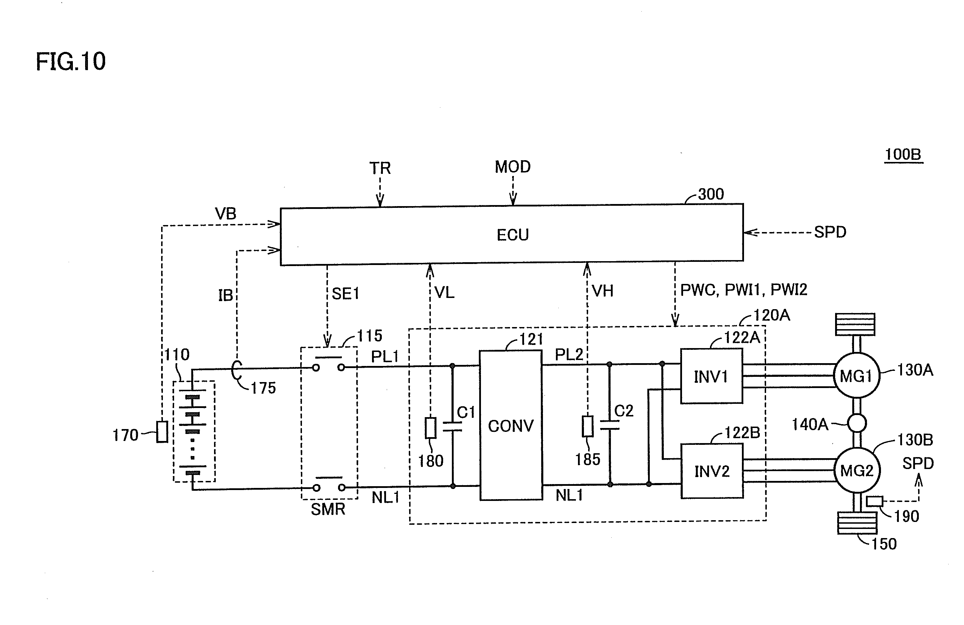

In the second embodiment above, the hybrid vehicle including the engine and the motor generator as a plurality of driving sources was described by way of example. The present invention is also applicable to vehicles having other configurations, such as an electric vehicle having a twin motor configuration capable of running with driving power from two motor generators as a plurality of driving sources, as shown in Fig. 10, for example.

A vehicle 100B in Fig. 10 has the configuration of vehicle 100A in Fig. 6 which is not provided with engine 160. Vehicle 100B runs with driving power from both motor generator 130A (MG1) and motor generator 130B (MG2).

In this case, although power storage device 100 cannot be charged as in the second embodiment, the interval operation can be performed by replacing the driving power of engine 160 with an output of MG1 in Fig. 8 in the second embodiment.

The present invention is also applicable to the case where MG1 is used as a motor rather than as a generator and the vehicle runs with driving power generated by three driving sources of MG1, MG2 and engine 160, in the configuration of Fig. 6 in the second embodiment.

It is to be noted that "coasting running" and "acceleration running" in the embodiments correspond to "a first running pattern" and "a second running pattern" in the present invention, respectively.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

100, 100A, 100B vehicle; 110 power storage device; 115 SMR; 120 PCU; 121 converter; 122, 122A, 122B inverter; 130A, 130B motor generator; 140, 140A power transmission gear; 150 drive wheel; 160 engine; 170, 180, 185 voltage sensor; 175 current sensor; 190 speed sensor; 300 ECU; C1, C2 capacitor; NL1, PL1, PL2 power line.

## Claims

1. A vehicle capable of running with electric power from a power storage device (110), comprising:
a rotating electric machine (130, 130B) for generating driving power for running the vehicle (100, 100A, 100B) by using the electric power from the power storage device (110); and
a control device (300) for controlling the rotating electric machine (130, 130B),
the control device (300) causing an interval operation of running the vehicle (100, 100A, 100B) to be performed, the interval operation switching between a first running pattern in which the generation of the driving power by the rotating electric machine (130, 130B) is stopped and the vehicle (100, 100A, 100B) runs with inertial force of the vehicle, and a second running pattern in which the vehicle runs with the driving power generated by the rotating electric machine (130, 130B).

2. The vehicle according to claim 1, wherein
the control device (300) causes the interval operation to be performed, when driving power requested by a user varies within a prescribed range.

3. The vehicle according to claim 2, wherein
the control device (300) causes switching between the first and second running patterns so as to maintain a speed of the vehicle (100, 100A, 100B) within an acceptable range, while the interval operation is performed.

4. The vehicle according to claim 3, wherein
the control device (300) causes switching to the first running pattern in response to an increase in the speed of the vehicle (100, 100A, 100B) to an upper limit of the acceptable range, and causes switching to the second running pattern in response to a decrease in the speed of the vehicle (100, 100A, 100B) to a lower limit of the acceptable range.

5. The vehicle according to claim 1, further comprising an engine (160) capable of generating driving power for the vehicle (100A), wherein
the control device (300) causes the engine (160) to be operated during a period when the vehicle (100A) runs in the second running pattern.

6. The vehicle according to claim 5, wherein
when the engine (160) is operated and the driving power from the engine (160) is used for running, the control device (300) causes the driving power generated by the rotating electric machine (130B) to decrease to a level lower than a level when the engine (160) is not operated.

7. The vehicle according to claim 5, further comprising a generator (130A) configured to be driven by the engine (160) to generate electric power for charging the power storage device (110), wherein
the control device (300) causes the engine (160) to be operated when the generator (130A) is driven to charge the power storage device (110).

8. The vehicle according to claim 7, wherein
when a state of charge of the power storage device (110) falls below a predetermined threshold value, the control device (300) causes the generator (130A) to be driven to charge the power storage device (110).

9. The vehicle according to claim 5, wherein
the control device (300) causes the engine (160) to be operated in response to the operation of the rotating electric machine (130B) in the second running pattern.

10. The vehicle according to claim 1, further comprising another rotating electric machine (130A) capable of generating driving power for the vehicle (100B), wherein
the control device (300) causes the another rotating electric machine (130A) to be operated during a period when the vehicle (100B) runs in the second running pattern.

11. A method of controlling a vehicle capable of running with driving power from a rotating electric machine (130, 130B), comprising the steps of:
performing a first running pattern in which the generation of the driving power by the rotating electric machine (130, 130B) is stopped and the vehicle (100, 100A, 100B) runs with inertial force of the vehicle;
performing a second running pattern in which the vehicle runs with the driving power generated by the rotating electric machine (130, 130B); and
performing an interval operation in which the vehicle runs by switching between the first and second running patterns.
